# EUROPEAN PATENT APPLICATION

(11) **EP 4 813 610 A1**
(43) Date of publication of application: **30.09.2026**
(21) Application number: 24893211.3
(22) Date of filing: 01.11.2024
(51) Int. Cl.: B29C 64/118, B22F 10/28, B33Y 10/00, B33Y 80/00

(54) **SHIELDING PART AND MANUFACTURING METHOD THEREFOR, AND ANTI-RADIATION PRODUCT**

(30) Priority: 22.11.2023 CN 202311572409
(71) Applicant: China Nuclear Power Technology Research Institute Co., Ltd., Shenzhen, Guangdong 518031 (CN)
(72) Inventor: LIU, Feng, Shenzhen, Guangdong 518031 (CN); ZHAN, Jie, Shenzhen, Guangdong 518031 (CN); JIANG, Danfeng, Shenzhen, Guangdong 518031 (CN); SU, Xingdong, Shenzhen, Guangdong 518031 (CN); LIU, Xiajie, Shenzhen, Guangdong 518031 (CN); LI, Li, Shenzhen, Guangdong 518031 (CN)
(74) Representative: Michalski Hüttermann & Partner mbB
(86) International application number: PCT/CN2024/129442
(87) International publication number: WO 2025/108053

(57) **Abstract**

The present application relates to a shielding part, a preparation method and use thereof, and a radiation protection product. The method for preparing the shielding part includes the following steps: (1) printing a shielding part skeleton by using a selective laser melting process, wherein the shielding part skeleton has a pore structure along a printing height direction; (2) printing a shielding material in the pore structure of the shielding part skeleton by using a fused deposition modeling process; and (3) repeating steps (1) to (2) to perform, for multiple times, the step of printing the shielding part skeleton and the step of printing the shielding material in the shielding part skeleton formed by previous printing, until the shielding part having a required height is obtained. By using the manufacturing method, the shielding part having the required height can be obtained, and the protection effect of the shielding part can be effectively improved.

## Description

### CROSS-REFERENCE TO RELATED APPLICATIONS

This application claims priority to China Patent Application No. 2023115724096, filed on November 22, 2023, entitled "SHIELDING PART AND MANUFACTURING METHOD THEREFOR, AND ANTI-RADIATION PRODUCT", the content of which is hereby incorporated by reference in its entirety.

### TECHNICAL FIELD

The present application relates to the field of materials, and in particular to a shielding part, a preparation method thereof, and a radiation protection product.

### BACKGROUND

Neutrons are one of the fundamental particles constituting atomic nucleuses. Although they carry no electric charge, neutrons having a relatively high speed can interact with matter to cause ionization and radioactive radiation, and are therefore widely applied in the fields of national defense, scientific research, radiotherapy, detection, and the like. Neutrons are indispensable in developing nuclear power through nuclear fission, and provide a large amount of clean energy for humanity. However, numerous secondary particles generated during neutron ionization can interact with tissues and cells, causing serious damage to human health. In addition, neutron irradiation can cause point defects and dislocations within materials, resulting in deterioration of material properties. With the rapid development of the nuclear industry, a series of novel reactors, such as lead-bismuth fast reactors, modular small reactors, sodium-cooled fast reactors, and high-temperature gas-cooled reactors, have successively entered the research, construction, or operation stage. Although these reactor types differ significantly in reactor core design, they all require neutron protection. Neutron protection materials are indispensable and important materials for fission reactors. However, neutron protection materials prepared by conventional methods have relatively poor neutron protection performance.

### SUMMARY

In view of this, the present application provides a shielding part having a relatively good protection effect, a preparation method and use thereof, and an radiation protection product.

The technical solutions of the present application for solving the above technical problems are as follows.

An aspect of the present application provides a method for preparing a shielding part, including the following steps:
(1) printing a shielding part skeleton by using a selective laser melting process, wherein the shielding part skeleton has a pore structure along a printing height direction;
(2) printing a shielding material in the pore structure of the shielding part skeleton by using a fused deposition modeling process;
(3) repeating steps (1) to (2) to perform, for multiple times, the step of printing the shielding part skeleton and the step of printing the shielding material in the shielding part skeleton formed by previous printing, until the shielding part having a required height is obtained.

In some embodiments, in the method for preparing the shielding part, a height of the shielding part skeleton printed in step (1) is less than or equal to 7 mm.

In some embodiments, in the method for preparing the shielding part, a height of the shielding part skeleton printed in step (1) is in a range from 1 mm to 5 mm.

In some embodiments, in the method for preparing the shielding part, a porosity of the shielding part skeleton is in a range from 60% to 85%.

In some embodiments, in the method for preparing the shielding part, the shielding part skeleton has a plurality of pore structures, and a pore diameter of a single pore structure is in a range from 1 mm to 5 mm.

In some embodiments, in the method for preparing the shielding part, a cross section of the pore structure includes at least one of a circle, an ellipse, or a regular polygon.

In some embodiments, in the method for preparing the shielding part, an extrusion rate for printing the shielding material by using the fused deposition modeling process is in a range from 100 mL/min to 500 mL/min.

In some embodiments, in the method for preparing the shielding part, a diameter of a filament for printing the shielding material by using the fused deposition modeling process is in a range from 1 mm to 3 mm.

In some embodiments, in the method for preparing the shielding part, the shielding material includes at least one of boron-containing polyethylene or boron-containing polypropylene.

In some embodiments, in the method for preparing the shielding part, a material of the shielding part skeleton includes an aluminum alloy.

A second aspect of the present application provides a shielding part, which is prepared by the method for preparing the shielding part provided in the first aspect.

A third aspect of the present application provides use of the shielding part provided in the second aspect in preparing a radiation protection product.

A fourth aspect of the present application provides a radiation protection product, including the shielding part provided in the second aspect.

Compared with the prior art, the method for preparing the shielding part of the present application has the following beneficial effects:

In the above method for preparing the shielding part, the shielding part skeleton is printed by the selective laser melting process, while controlling the shielding part skeleton to have the pore structure along the printing height direction and controlling the height of the shielding part skeleton printed in a single printing, so that when the shielding material is further printed in the pore structure of the shielding part skeleton by the fused deposition modeling process, the printing process is smooth, and the compactness of the shielding material printed in situ in the pore structure is relatively high. By repeating the above steps, namely, continuing to print the shielding part skeleton above the shielding part in which the shielding material is filled in the pore structure by the selective laser melting process, increasing the height of the previously printed shielding part skeleton, and to print the material in the pore structure of the shielding part skeleton printed from the immediately preceding printing, the shielding part having the required height can be obtained. The steps cooperate with one another, so that the protection effect of the shielding part can be effectively improved.

### BRIEF DESCRIPTION OF THE DRAWINGS

In order to more clearly illustrate the technical solutions in the embodiments of the present application or in the conventional technology, the drawings used in the description of the embodiments or the conventional technology are briefly introduced below. It is apparent that the drawings described below are only embodiments of the present application, and for those skilled in the art, other drawings can be obtained based on the disclosed drawings without any creative effort.

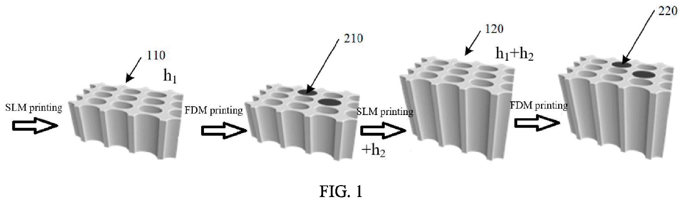

FIG. 1 is a schematic flow chart of a method for preparing a shielding part provided according to an embodiment.

### DETAILED DESCRIPTION

The technical solutions in embodiments of the present application are clearly and completely described in the following with reference to the accompanying drawings in the embodiments of the present application. Apparently, the described embodiments are merely some rather than all of the embodiments of the present application. All other embodiments obtained by a person of ordinary skill in the art based on the embodiments of the present application without creative efforts shall fall within the protection scope of the present application.

Unless otherwise defined, all technical and scientific terms used herein have the meanings commonly understood by those skilled in the art to which the present application pertains. The terminology used herein in the description of the present application is for the purpose of describing particular embodiments only and is not intended to be limiting of the application.

The terms "comprise," "include," or any other variations thereof are intended to cover a non-exclusive inclusion, such that a process, method, article, or apparatus that includes a list of elements includes not only those elements, but also other elements not expressly listed, or further includes elements inherent to such process, method, article, or apparatus. Without further limitation, an element defined by the phrase "comprising one ..." does not preclude the presence of additional identical elements in the process, method, article, or apparatus that includes the element. The indefinite articles "a" and "an" preceding an element or component of the present application are not limiting with respect to the number of the element or component, namely the number of occurrences. Therefore, "a" or "an" should be construed as including one or at least one, and the singular form of an element or component also includes the plural form, unless the number clearly refers only to the singular form. The term "a plurality of" means at least two, for example, two, three, or the like, unless otherwise expressly and specifically defined.

The weight of the relevant components mentioned in the specification of the embodiments of the present application may not only refer to the specific content of each component, but may also represent the proportional relationship by weight among the components. Therefore, as long as the content of the relevant components in the specification of the embodiments of the present application is proportionally increased or decreased, it shall fall within the scope disclosed in the specification of the embodiments of the present application. Specifically, the units of the weight described in the specification of the embodiments of the present application may be commonly known in the chemical field, such as µg, mg, g, kg, etc.

Except as shown in the working examples or otherwise indicated, all numbers used in the specification and claims to express amounts of components, physicochemical properties, and the like are understood to be modified by the term "about" in all instances. For example, therefore, unless indicated to the contrary, the numerical parameters set forth in the foregoing specification and the appended claims are approximations, and a person skilled in the art can appropriately vary these approximations by using the teachings disclosed herein to seek to obtain the desired properties. The use of numerical ranges expressed by endpoints includes all numbers within the range and any range within the range. For example, 1 to 5 includes 1, 1.1, 1.3, 1.5, 2, 2.75, 3, 3.80, 4, 5, etc.

An embodiment of the present application provides a method for preparing a shielding part, including the following steps.

Step S10: printing a shielding part skeleton by using a selective laser melting process (SLM process), wherein the shielding part skeleton has a pore structure along a printing height direction.

In some examples, the height of the shielding part skeleton printed in step S10 is less than or equal to 7 mm.

In some examples, the height of the shielding part skeleton printed in step S10 is in a range from 1 mm to 5 mm.

It should be understood that the height of the shielding part skeleton printed in step S10 refers to a height printed by performing a single step S10, and after printing to this height, this step is stopped and step S20 is performed, and the height of the shielding part skeleton printed in each subsequently repeated step S10 also meets the above requirements. It should be further understood that the height of the shielding part skeleton printed in a single printing includes, but is not limited to, 1 mm, 2 mm, 3 mm, 4 mm, and 5 mm. In examples, the height may be within a range formed by any two of these specific values as endpoint values, and the same applies below.

Optionally, the height of the shielding part skeleton printed in step S10 is in a range from 3 mm to 5 mm.

Preferably, the height of the shielding part skeleton printed in step S10 is 4 mm.

By controlling the height of the shielding part skeleton printed in a single printing, non-compact filling caused by an unsmooth process of filling a shielding material by FDM due to an excessively deep pore structure is avoided. That is, by controlling the height of the shielding part skeleton printed in a single printing, the compactness of the shielding material in the shielding part skeleton can be further improved, thereby further improving the shielding effect of the shielding part.

In some examples, in step S10, the porosity of the shielding part skeleton is in a range from 60% to 85%.

It should be understood that the porosity of the shielding part skeleton refers to the porosity of the shielding part skeleton printed in step S10. It should be further understood that by controlling the porosity of the shielding part skeleton printed in each step S10 within the above range, the porosity of the shielding part skeleton of the final entire shielding part can be controlled.

It should be also understood that the porosity of the shielding part skeleton includes, but is not limited to, 60%, 62%, 65%, 68%, 70%, 72%, 75%, 78%, 80%, 82%, or 85%.

Optionally, the porosity of the shielding part skeleton is in a range from 75% to 85%.

Preferably, the porosity of the shielding part skeleton is 80%.

By controlling the porosity of the shielding part skeleton, the filling proportion of the shielding material in the shielding part is ensured, a relatively good shielding effect is achieved, and meanwhile the shielding part also has relatively good mechanical strength.

In some examples, in step S10, the shielding part skeleton has a plurality of pore structures, and a pore diameter of a single pore structure is in a range from 1 mm to 5 mm.

It should be understood that the pore diameter of the single pore structure includes, but is not limited to, 1 mm, 2 mm, 3 mm, 4 mm, or 5 mm.

Optionally, the pore diameter of the single pore structure is in a range from 2 mm to 4 mm.

Preferably, the pore diameter of the single pore structure is 3 mm.

By controlling the pore diameter of the single pore structure in the shielding part skeleton, the smoothness of the printing process can be further improved, so that the compactness of the shielding material printed in the pore structure is further improved, thereby further improving the shielding effect of the shielding part, and meanwhile enabling the shielding part to have relatively good mechanical strength.

In some examples, in step S10, the pore structure is a through hole along the printing height direction.

It should be understood that the structure of the pore structure is not limited in the present application, as long as the shielding material can be printed therein, such as a circle, an ellipse, a polygon, or the like. Further, the polygon may be classified into a regular polygon, an irregular polygon, a convex polygon, a concave polygon, etc.

In some examples, in step S10, a cross section of the pore structure includes at least one of a circle, an ellipse, or a regular polygon.

Further, the regular polygon includes, but is not limited to, a regular triangle, a square, a regular pentagon, a regular hexagon, or the like.

In some examples, in step S10, the cross section of the pore structure is a circle. This structure can allow the shielding material to be better filled subsequently, and meanwhile has relatively good mechanical strength.

In some examples, in step S10, parameters of the selective laser melting process include: a laser power of 200 W to 400 W, a scanning speed of 500 mm/s to 1500 mm/s, a scanning spacing of 0.05 mm to 0.08 mm, and contour offset scanning is adopted as a scanning strategy.

It should be understood that the laser power includes, but is not limited to, 200 W, 300 W, or 400 W. The scanning speed includes, but is not limited to, 500 mm/s, 600 mm/s, 800 mm/s, 1000 mm/s, 1200 mm/s, or 1500 mm/s. The scanning spacing is 0.05 mm, 0.06 mm, 0.07 mm, or 0.08 mm.

In some examples, in step S10, a material of the shielding part skeleton includes an aluminum alloy.

In some examples, after step S10 is finished and before step S20 is performed, the method further including a step of removing unmelted powder from the shielding part skeleton.

In this way, a portion of the shielding part skeleton where the shielding material needs to be printed can be exposed, facilitating the printing of the shielding material into the pore structure of the shielding part skeleton in step S20.

Further, the unmelted powder is blown and swept away by high-pressure air.

Step S20: printing a shielding material in the pore structure of the shielding part skeleton by using a fused deposition modeling process (FDM process).

The shielding material is printed in the pore structure of the shielding part skeleton and is integrally formed by additive manufacturing, filling the shielding part skeleton, which is beneficial to improving the compactness of the shielding material in the pore structure.

In some examples, in step S20, an extrusion rate for printing the shielding material by using the fused deposition modeling process is in a range from 100 mL/min to 500 mL/min.

It should be understood that an assembly for the fused deposition modeling process includes a filament extruder, a hot-melt nozzle, and a displacement device that drives the hot-melt nozzle to perform a printing action. By controlling the extrusion rate of the filament extruder, the extrusion rate for printing the shielding material by using the fused deposition modeling process is controlled.

In some examples, in step S20, the extrusion rate of the filament extruder is in a range from 100 mL/min to 500 mL/min.

It should be understood that the extrusion rate for printing the shielding material by using the fused deposition modeling process includes, but is not limited to, 100 mL/min, 150 mL/min, 200 mL/min, 250 mL/min, 300 mL/min, 350 mL/min, 400 mL/min, 450 mL/min, or 500 mL/min.

Optionally, the extrusion rate is in a range from 200 mL/min to 400 mL/min.

Preferably, the extrusion rate is 300 mL/min.

By controlling the extrusion rate for printing the shielding material by using the fused deposition modeling process, the filament can be better filled in the pore structure, overflow onto the surface of the shielding part skeleton is avoided, and meanwhile the printing efficiency is ensured.

In some examples, in step S20, a filament diameter for printing the shielding material by using the fused deposition modeling process is in a range from 1 mm to 3 mm.

It should be understood that the filament diameter for printing the shielding material by using the fused deposition modeling process can be controlled by controlling a nozzle diameter of the hot-melt nozzle. Further, the filament diameter for printing the shielding material by using the fused deposition modeling process includes, but is not limited to, 1 mm, 1.2 mm, 1.5 mm, 1.8 mm, 2 mm, 2.2 mm, 2.5 mm, or 3 mm.

Optionally, the filament diameter for printing the shielding material by using the fused deposition modeling process is in a range from 2 mm to 3 mm.

Preferably, the filament diameter for printing the shielding material by using the fused deposition modeling process is 2.5 mm.

By controlling the filament diameter for printing the shielding material by using the fused deposition modeling process, it is beneficial for the continuous passage of the shielding material after being melted, and meanwhile a relatively high discharge rate is achieved.

It should be understood that a shielding object to which the shielding part of the present application is applicable is determined according to the shielding material in the pore structure of the shielding part, that is, determined according to the performance of the shielding material. For example, when the shielding material has a shielding performance against neutrons, the shielding part prepared in the present application can be used for shielding neutrons.

In some examples, in step S20, the shielding material is a neutron shielding material.

In this case, the shielding part is a neutron shielding part.

In some examples, in step S20, the filament for the shielding material includes at least one of boron-containing polyethylene or boron-containing polypropylene.

Step S30: repeating steps S10 to S20 to perform, for multiple times, the step of printing the shielding part skeleton and the step of printing the shielding material in the shielding part skeleton formed by previous printing, until the shielding part having a required height is obtained.

In the above method for preparing the shielding part, the shielding part skeleton is printed by using the selective laser melting process, while controlling the shielding part skeleton to have the pore structure along the printing height direction and controlling the height of the shielding part skeleton printed in a single printing, so that when the shielding material is further printed in the pore structure of the shielding part skeleton by using the fused deposition modeling process, the printing process is smooth, and the compactness of the shielding material printed in situ in the pore structure is relatively high. By repeating the above steps, namely, continuing to print the shielding part skeleton above the shielding part in which the shielding material has been filled in the pore structure by using the selective laser melting process, increasing the height of the previously printed shielding part skeleton, and to print the material in the pore structure of the shielding part skeleton printed from the immediately preceding printing, the shielding part having the required height can be obtained. The steps cooperate with one another, so that the protection effect of the shielding part can be effectively improved.

It should be understood that, as shown in FIG. 1, first, in step S10, the shielding part skeleton having a height of h₁, which is referred to as a first shielding part skeleton 110, is printed and obtained by using the selective laser melting process (SLM printing). In step S20, the shielding material is printed in situ in the pore structure of the first shielding part skeleton by using the fused deposition modeling process (FDM printing), to obtain a first shielding part. Then step S10 is repeated, and a second shielding part skeleton with a height of h₂ is further printed by using the selective laser melting process on the first shielding part skeleton in which the shielding material 210 is printed in the pore structure. At this time, the obtained shielding part skeleton 120 includes the first shielding part skeleton and the second shielding part skeleton, with a height of h₁+h₂, and the shielding material is printed in the first shielding part skeleton. Then step S20 is repeated, and the shielding material 220 is printed in situ in the pore structure of the second shielding part skeleton with the height of h₂. At this time, the obtained second shielding part includes the first shielding part skeleton and the second shielding part skeleton, with a height of h₁+h₂, and both the first shielding part skeleton and the second shielding part skeleton are filled with the shielding material. Steps S10 to S20 are repeated in this manner, and finally the required height of the shielding part is obtained. For example, when the required height of the shielding part is H, the process may be performed in sequence as follows: printing the shielding part skeleton for the first time, with a height of h₁, printing the shielding material, printing the shielding part skeleton for the second time, with a height of h₂, printing the shielding material, printing the shielding part skeleton for the third time, with a height of h₃, printing the shielding material, printing the shielding part skeleton for the fourth time, with a height of h₄, printing the shielding material, and circulating in this manner, wherein the heights of the shielding part skeletons obtained at respective printing times are respectively h₁, h₂, h₃, h₄, h₅, h₆, h₇, ...; it should be understood that h₁, h₂, h₃, h₄, h₅, h₆, h₇, etc. may be equal or unequal, and the number of printing times is not limited, as long as the sum of the heights of the finally printed shielding part skeletons meets H.

It should be further understood that the height of the shielding part of the present application is not limited, and is flexible and adjustable.

An embodiment of the present application provides a shielding part, which is prepared by the above method for preparing the shielding part.

The shielding part provided by the present application has a relatively good shielding effect, is particularly suitable for a neutron shielding part, and has relatively high mechanical strength.

An embodiment of the present application provides use of the above shielding part in preparing a radiation protection product.

Another embodiment of the present application provides a radiation protection product, a material of which includes the above shielding part.

In some embodiments, the radiation protection product includes, but is not limited to, anti-radiation clothing, an anti-radiation cover, an anti-radiation helmet, and the like.

The above shielding part, when used for preparing a radiation protection product, is suitable for protection against neutrons and the like, has relatively good shielding performance against radiation such as neutrons, and can further impart relatively good mechanical performance to the radiation protection product.

In some embodiments, the material of the radiation protection product may be the above shielding part, namely, the radiation protection product is directly manufactured by using the above shielding part. In other embodiments, the material of the radiation protection product may further comprise other materials in addition to the above shielding part.

The present application is further described in detail below with reference to specific embodiments, but the embodiments of the present application are not limited thereto.

### Example 1

(1) Using aluminum alloy powder, a shielding part skeleton was printed based on a powder-bed SLM process, with a laser as a heat source and nitrogen as a protective atmosphere, and printing was stopped when the printed shielding part skeleton had a height h₁ of 4 mm, thereby obtaining a first shielding part skeleton. The first shielding part skeleton had a pore structure along the printing height direction, with a porosity of 80%. The pore structure was a circular hole. The pore diameter of the pore structure was 3 mm. The height h₁ of the first shielding part skeleton was 4 mm. Parameters of the SLM process were as follows: a laser power of 320 W, a scanning speed of 1000 mm/s, a scanning spacing of 0.07 mm, and contour offset scanning was adopted as a scanning strategy.
(2) A boron-containing polyethylene filament was printed into the pore structure of the first shielding part skeleton by using an FDM process, thereby obtaining a first shielding part. Parameters of the FDM process were as follows: a nozzle diameter of 2.5 mm and an extrusion rate of 300 mL/min.
(3) A second shielding part skeleton was continuously printed on top of the first shielding part skeleton of the first shielding part by using the method of step (1). A height h₂ of the second shielding part skeleton was 4 mm. At this time, the total height of the shielding part skeleton was 8 mm. The others were the same as those in step (1).
(4) A boron-containing polyethylene filament was printed into the pore structure of the second shielding part skeleton by using the method of step (2), thereby obtaining a second shielding part, and the others were the same as those in step (2). At this time, the height of the second shielding part was 8 mm.

### Example 2

Example 2 was substantially the same as Example 1, except that in Example 2, the height of the first shielding part skeleton in step (1) was 5 mm, the height of the second shielding part skeleton in step (3) was 3 mm, and the height of the finally obtained second shielding part was 8 mm.

### Example 3

Example 3 was substantially the same as Example 1, except that in Example 3, the height of the first shielding part skeleton in step (1) was 7 mm, the height of the second shielding part skeleton in step (3) was 1 mm, and the height of the finally obtained second shielding part was 8 mm.

### Example 4

Example 4 was substantially the same as Example 1, except that in Example 4, the porosity of the first shielding part skeleton in step (1) was 60%, and the pore diameter of the pore structure was 3 mm; the relevant parameters in step (3) were the same as those in step (1) of Example 3.

### Example 5

Example 5 was substantially the same as Example 1, except that in Example 5, the porosity of the first shielding part skeleton in step (1) was 80%, and the pore diameter of the pore structure was 5 mm; the relevant parameters in step (3) were the same as those in step (1) of Example 4.

### Example 6

Example 6 was substantially the same as Example 1, except that in Example 6, parameters of the FDM process in step (2) were as follows: a nozzle diameter of 1 mm and an extrusion rate of 100 mL/min; the relevant parameters in step (4) were the same as those in step (2) of Example 5.

### Example 7

Example 7 was substantially the same as Example 1, except that in Example 7, parameters of the FDM process in step (2) were as follows: a nozzle diameter of 3 mm and an extrusion rate of 500 mL/min; the relevant parameters in step (4) were the same as those in step (2) of Example 6.

### Comparative Example 1

(1) Using aluminum alloy powder, a shielding part skeleton was printed based on a powder-bed SLM process, with a laser as a heat source and nitrogen as a protective atmosphere, and printing was stopped when the printed shielding part skeleton had a height h₁ of 8 mm. The shielding part skeleton had a pore structure along a printing height direction, with a porosity of 80%. The pore structure was a circular hole. The pore diameter of the pore structure was 3 mm. The height h of the shielding part skeleton was 8 mm. Parameters of the SLM process were as follows: a laser power of 320 W, a scanning speed of 1000 mm/s, a scanning spacing of 0.07 mm, and contour offset scanning was adopted as a scanning strategy.
(2) A boron-containing polyethylene filament was printed into the pore structure of the shielding part skeleton by using an FDM process, thereby obtaining a shielding part. Parameters of the FDM process were as follows: a nozzle diameter of 2.5 mm and an extrusion rate of 300 mL/min.

### Comparative Example 2

Using aluminum alloy powder, a first shielding part skeleton was printed based on a powder-bed SLM process, with a laser as a heat source and nitrogen as a protective atmosphere, and printing was stopped when the printed shielding part skeleton had a height h₁ of 4 mm, thereby obtaining a first shielding part skeleton. The first shielding part skeleton had a pore structure along the printing height direction, with a porosity of 80%. The pore structure was a circular hole. The pore diameter of the pore structure was 3 mm. The height h₁ of the first shielding part skeleton was 4 mm. Parameters of the SLM process were as follows: a laser power of 320 W, a scanning speed of 1000 mm/s, a scanning spacing of 0.07 mm, and contour offset scanning was adopted as a scanning strategy.

(2) Boron-containing polyethylene powder was directly poured into the pore structure of the first shielding part skeleton, thereby obtaining a first shielding part.

(3) A second shielding part skeleton was continuously printed on top of the first shielding part skeleton of the first shielding part by using the method of step (1). The height h₂ of the second shielding part skeleton was 4 mm. At this time, the total height of the shielding part skeleton was 8 mm. The others were the same as those in step (1).

(4) Boron-containing polyethylene powder was directly poured into the pore structure of the first shielding part skeleton by using the method of step (2), thereby obtaining a second shielding part.

The main parameters of the Examples and Comparative Examples are shown in Table 1.

**Table 1**

| Group No. | h ₁, h₂ mm | Total hight mm | Porosity % | Pore diameter mm | Extrusion rate mL/min | nozzle diameter mm |
|---|---|---|---|---|---|---|
| Example 1 | 4, 4 | 8 | 80 | 3 | 300 | 2.5 |
| Example 2 | 5, 3 | 8 | 80 | 3 | 300 | 2.5 |
| Example 3 | 7, 1 | 8 | 80 | 3 | 300 | 2.5 |
| Example 4 | 4, 4 | 8 | 60 | 3 | 300 | 2.5 |
| Example 5 | 4, 4 | 8 | 80 | 5 | 300 | 2.5 |
| Example 6 | 4, 4 | 8 | 80 | 3 | 100 | 1 |
| Example 7 | 4, 4 | 8 | 80 | 3 | 500 | 3 |
| Comparative Example 1 | shielding part skeleton with a height of 8 mm printed in a single printing | | | | | |
| Comparative Example 2 | boron-containing polyethylene powder directly poured into the pore structure of the shielding part skeleton | | | | | |

The shielding parts prepared in Examples and Comparative Examples were subjected to a density test, a thermal neutron shielding performance test, and a compressive strength test. The density test was performed by using the Archimedes drainage method. The compressive strength test was conducted in accordance with ISO 13314:2011.

### Test Method for Thermal Neutron Shielding Performance

The test was performed using a standard neutron dose equivalent rate device. Count rates of a thermal neutron detector under conditions with and without shielding by a test sample were respectively measured. During the measurement process, the position and orientation of the thermal neutron detector were kept unchanged, and the plane of the test sample was parallel to a thermal neutron emission plane of a moderator. The thermal neutron shielding performance of the test sample was obtained by comparing the count rate results under the two conditions. In order to prevent neutrons from other directions from affecting the test results, the thermal neutron detector was placed in a cubic cadmium shielding box enclosed by cadmium sheets having a thickness of 2 mm. A side of the cadmium shielding box facing the thermal neutron emission plane of the moderator was not provided with the cadmium sheet, so as to ensure that the thermal neutron detector received only thermal neutrons from the direction of the moderator. The specific experimental steps were as follows:
(1) The cadmium shielding box and the detector were placed at the center position of a test region, and the count rate of the detector without a sample was measured.
(2) The positions of the cadmium shielding box and the detector were kept unchanged, the test sample was placed on the side of the cadmium shielding box facing the thermal neutron emission plane of the moderator, and the count rate of the detector with the sample was measured.
(3) The thermal neutron shielding performance of the sample was calculated by using the following formula:
   $η = 1 - \frac{{C}_{s}}{{C}_{b}}$
   wherein η represents the shielding performance, Cₛ is the count rate after the shielding material was added, and C_{b} is the count rate of the cadmium box without a sample.

The test results are shown in Table 2.

**Table 2**

| Group No. | Density / g·cm⁻³ | Thermal neutron shielding performance /% | Compressive strength/MPa |
|---|---|---|---|
| Example 1 | 1.32 | 96.3 | 39.16 |
| Example 2 | 1.25 | 94.3 | 39.13 |
| Example 3 | 1.20 | 90.3 | 39.12 |
| Example 4 | 1.64 | 84.5 | 106.86 |
| Example 5 | 1.48 | 91.1 | 39.0 |
| Example 6 | 1.30 | 93.4 | 39.15 |
| Example 7 | 1.29 | 92.8 | 39.12 |
| Comparative Example 1 | 1.12 | 80.5 | 39.08 |
| Comparative Example 2 | 1.22 | 78.9 | 39.11 |

It can be seen from Table 2 that the shielding parts prepared in Examples have better thermal neutron shielding performance than those in the Comparative Examples.

The technical features of the above-mentioned embodiments can be combined arbitrarily. In order to make the description concise, not all possible combinations of the technical features of the embodiments are described. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A method for preparing a shielding part, comprising following steps:
(1) printing a shielding part skeleton by using a selective laser melting process, wherein the shielding part skeleton has a pore structure extending along a printing height direction;
(2) printing a shielding material in the pore structure of the shielding part skeleton by using a fused deposition modeling process;
(3) repeating steps (1) to (2) to perform, for multiple times, the step of printing the shielding part skeleton and the step of printing the shielding material in the shielding part skeleton formed by previous printing, until the shielding part having a required height is obtained.

2. The method according to claim 1, wherein a height of the shielding part skeleton printed in a single printing in step (1) is less than or equal to 7 mm.

3. The method according to any one of claims 1 to 2, wherein a height of the shielding part skeleton printed in a single printing in step (1) is in a range from 1 mm to 5 mm.

4. The method according to any one of claims 1 to 3, wherein a porosity of the shielding part skeleton is in a range from 60% to 85%.

5. The method according to any one of claims 1 to 4, wherein a porosity of the shielding part skeleton is in a range from 75% to 85%.

6. The method according to any one of claims 1 to 5, wherein the shielding part skeleton has a plurality of pore structures, and a pore diameter of a single pore structure is in a range from 1 mm to 5 mm.

7. The method according to any one of claims 1 to 6, wherein the shielding part skeleton has a plurality of pore structures, and a pore diameter of a single pore structure is in a range from 2 mm to 4 mm.

8. The method according to any one of claims 1 to 7, wherein the pore structure is a through hole extending along the printing height direction.

9. The method according to any one of claims 1 to 8, wherein a cross section of the pore structure comprises at least one of a circle, an ellipse, or a regular polygon.

10. The method according to any one of claims 1 to 9, wherein a cross section of the pore structure is a circle.

11. The method according to any one of claims 1 to 10, wherein parameters of the selective laser melting process comprise: a laser power of 200 W to 400 W, a scanning speed of 500 mm/s to 1500 mm/s, and a scanning spacing of 0.05 mm to 0.08 mm.

12. The method according to any one of claims 1 to 11, wherein an extrusion rate for printing the shielding material by using the fused deposition modeling process is in a range from 100 mL/min to 500 mL/min.

13. The method according to any one of claims 1 to 12, wherein an extrusion rate for printing the shielding material by using the fused deposition modeling process is in a range from 200 mL/min to 400 mL/min.

14. The method according to any one of claims 1 to 13, wherein a diameter of a filament for printing the shielding material by using the fused deposition modeling process is in a range from 1 mm to 3 mm.

15. The method according to any one of claims 1 to 14, wherein a diameter of a filament for printing the shielding material by using the fused deposition modeling process is in a range from 2 mm to 3 mm.

16. The method according to any one of claims 1 to 15, wherein the shielding material is a neutron shielding material.

17. The method according to any one of claims 1 to 16, wherein the shielding material comprises at least one of boron-containing polyethylene or boron-containing polypropylene.

18. The method according to any one of claims 1 to 17, wherein a material of the shielding part skeleton comprises an aluminum alloy.

19. A shielding part prepared by using the method according to any one of claims 1 to 18.

20. A radiation protection product, comprising the shielding part according to claim 19.
